# EUROPEAN PATENT SPECIFICATION

(11) **EP 3 542 595 B1**
(45) Date of publication and mention of the grant of the patent: **11.11.2020**
(21) Application number: 16805484.9
(22) Date of filing: 15.11.2016
(51) Int. Cl.: H05B 7/06, F27D 11/10, H05B 7/148

(54) **METHOD FOR CONTROLLING THE ELECTRIC ARC IN AN ELECTRIC ARC FURNACE AND ELECTRIC ARC FURNACE**
VERFAHREN ZUR STEUERUNG DES LICHTBOGENS IN EINEM LICHTBOGENOFEN SOWIE LICHTBOGENOFEN
PROCÉDÉ DE COMMANDE DE L'ARC ÉLECTRIQUE DANS UN FOUR À ARC ÉLECTRIQUE ET FOUR À ARC ÉLECTRIQUE

(43) Date of publication of application: 25.09.2019
(73) Proprietor: Outotec (Finland) Oy, 02230 Espoo (FI)
(72) Inventor: JUVONEN, Seppo, 06100 Porvoo (FI); JOKINEN, Jarmo, 00200 Helsinki (FI); RÖNNBERG, Tom, 02820 Espoo (FI); LOIKKANEN, Ilpo, 02260 Espoo (FI)
(74) Representative: Papula Oy
(86) International application number: PCT/FI2016/050802
(87) International publication number: WO 2018/091762

(56) References cited:
- EP-A2- 0 150 484
- DE-A1- 4 222 854
- JP-A- H03 279 777
- JP-A- H05 135 898
- JP-U- H0 545 998
- US-B1- 6 636 548

## Description

### Field of the invention

The invention relates to method for controlling a geometric form of an electric arc between a top electrode assembly and a bottom electrode assembly in an electric arc furnace as defined in the preamble of independent claim 1.

The invention also relates to an electric arc furnace as defined in the preamble of independent claim 9.

### Objective of the invention

The object of the invention is to provide a method for controlling a geometric form of an electric arc between a top electrode assembly and a bottom electrode assembly in an electric arc furnace and an electric arc furnace.

### Short description of the invention

The method for controlling a geometric form of an electric arc between a top electrode assembly and a bottom electrode assembly in an electric arc furnace of the invention is characterized by the definitions of independent claim 1.

Preferred embodiments of the method are defined in the dependent claims 2 to 8.

The electric arc furnace of the invention is correspondingly characterized by the definitions of independent claim 9.

Preferred embodiments of the electric arc furnace are defined in the dependent claims 10 to 16.

Document DE 4222854 A1 discloses a general method for controlling the geometric form of an electric arc between a top electrode assembly and a bottom electrode assembly in an electric arc furnace. Documents JP 05135898 H, EP 010484 A2 and US 6636548 B1 disclose further solutions for such controlling.

### List of figures

In the following the invention will described in more detail by referring to the figures, of which
Figure 1 shows in partly cut view some parts of an electric arc furnace according to a first embodiment,
Figure 2 shows an electric arc furnace according to a second embodiment,
Figure 3 shows a first embodiment of a bottom electrode assembly,
Figure 4 shows a second embodiment of a bottom electrode assembly,

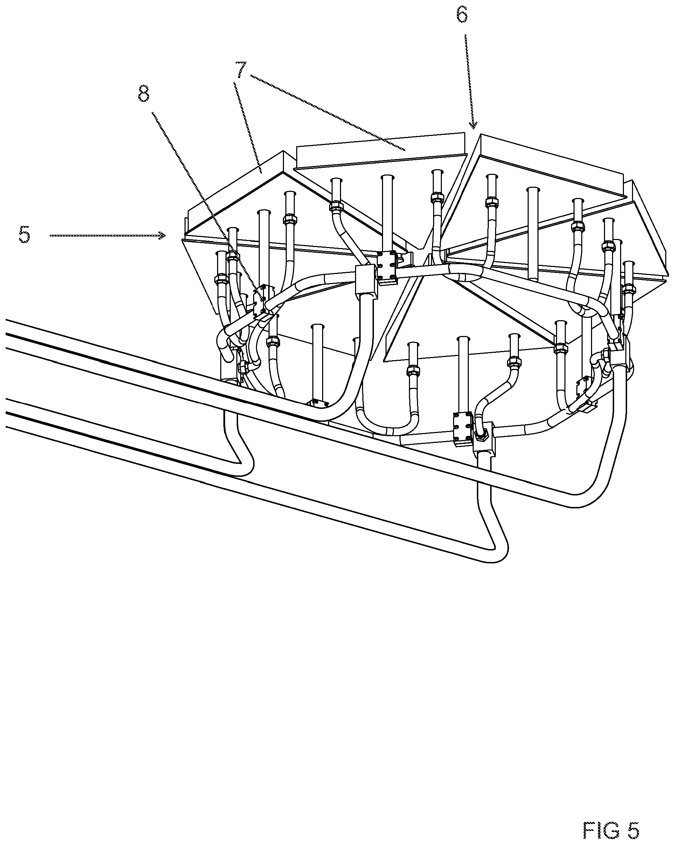

Figure 5 shows a third embodiment of a bottom electrode assembly,

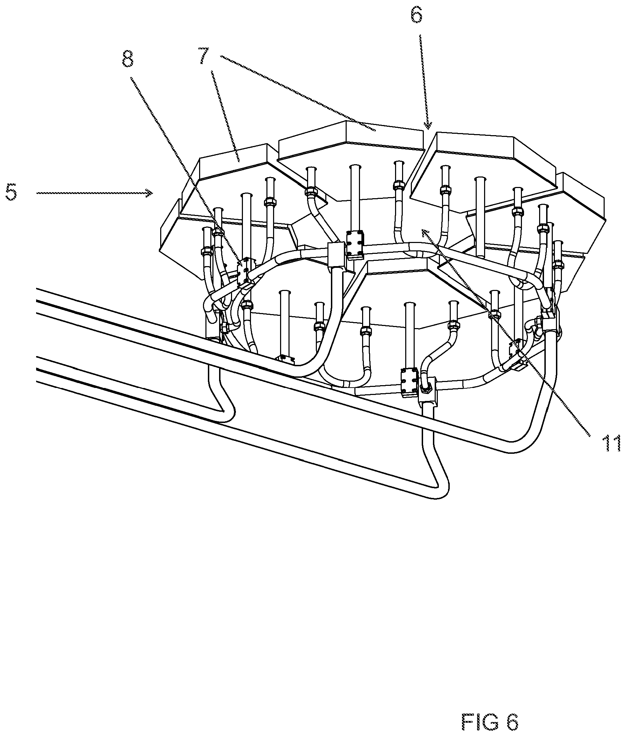

Figure 6 shows a fourth embodiment of a bottom electrode assembly,

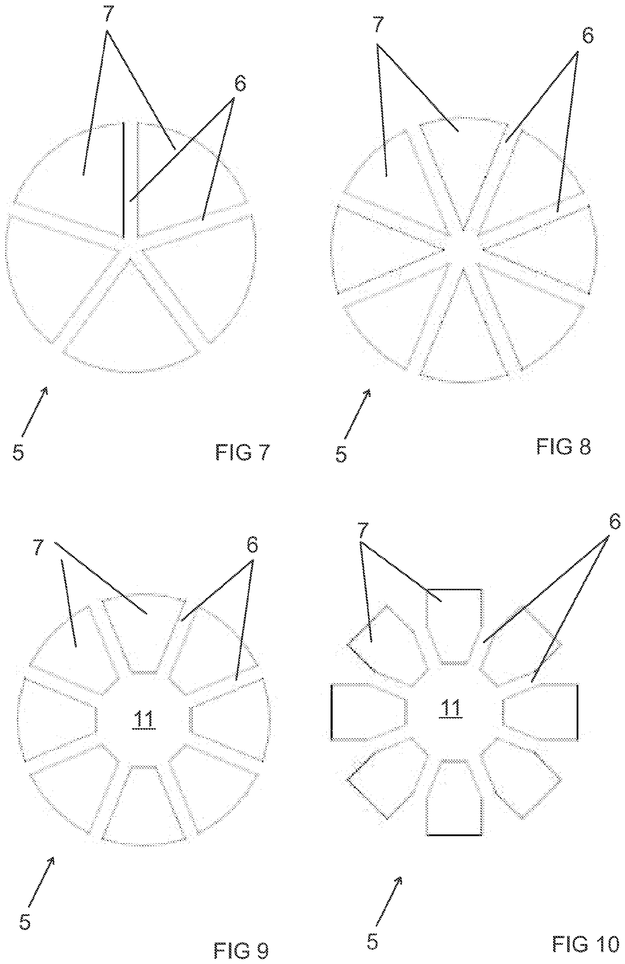

Figures 7 to 10 shows as seen from above some possible configurations of a plate structure of a bottom electrode assembly, and

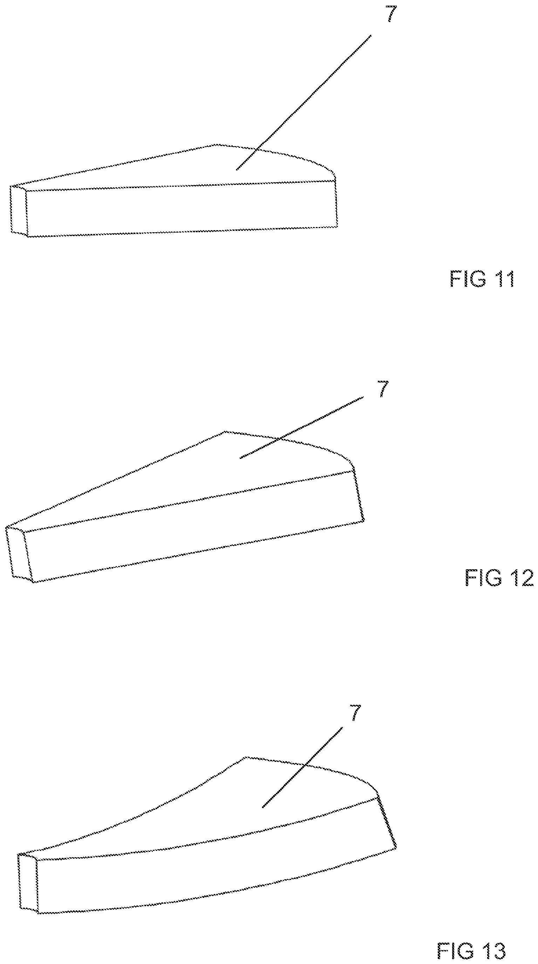

Figures 11 to 13 shows some possible configurations of plate sections of a plate structure of a bottom electrode assembly.

### Detailed description of the invention

The invention relates to a method for controlling a geometric form of an electric arc between a top electrode assembly 1 and a bottom electrode assembly 2 in a furnace space 3 of an electric arc furnace and to an electric arc furnace.

First, the method for controlling a geometric form of an electric arc between a top electrode assembly 1 and a bottom electrode assembly 2 in a furnace space 3 of an electric arc furnace and some embodiments and variants of the method will be described in greater detail.

The furnace space 3 is formed by a furnace shell 11 and can be configured to hold at least one of gas (not shown in the figures), slag (not shown in the figures), and smelt (not shown in the figures).

The furnace shell 11 can comprise refractory lining 12 and a conductive heart 13.

The electric arc furnace comprises an electrical power system 4 configured to supply electrical power to the top electrode assembly 1 and to the bottom electrode assembly 2 to create an electrical arc in the furnace space 3 between the top electrode assembly 1 and the bottom electrode assembly 2.

The bottom electrode assembly 2 comprises a plate structure 5.

The plate structure 5 is preferably, but not necessarily, symmetrical about a vertical center axis 10.

The plate structure 5 can have the shape of a symmetrical cylinder or a symmetrical prism that is symmetrical about a vertical center axis 10.

Alternatively, the plate structure can have the shape of a symmetrical cup that is symmetrical about a vertical center axis 10, the shape of a symmetrical hemisphere that is symmetrical about a vertical center axis 10, or the shape of a part of a symmetrical hemisphere that is symmetrical about a vertical center axis 10 so that an upper surface (not marked with a reference numeral) of the plate structure 5 is in cross-section at least partly curved and/or inclined between the vertical center axis 10 of the plate structure and a perimeter (not marked with a reference numeral) of the plate structure 5.

The plate structure 5 may have an aperture 11 at a vertical center axis 10 of the plate structure 5.

The method comprises dividing the plate structure 5 of the bottom electrode assembly 2 by division gaps 6 into at least two plate sections 7. The plate sections 7 into which the plate structure 5 of the bottom electrode assembly 2 is divided by division gaps 6 are preferably, but not necessarily, identical. The number of division gaps 6 can be even or uneven.

At least one of the division gaps 6 can be vertical.

The method comprises connecting each plate section 7 to the electrical power system 4 by means of connection means 8 configured to connect and disconnect at least one plate section 7 from the electrical power system 4.

The method can comprise individually connecting each plate section 7 to the electrical power system 4 by means of connection means 8 configured to individually connect and disconnect each plate section 7 from the electrical power system 4. Alternatively or additionally, the connection means 8 can be configured to connect and disconnect the plate sections 7 in series from the electrical power system 4.

The method comprises controlling the geometric form of the arc between the top electrode and the bottom electrode in the electric arc furnace by means of the connection means 8.

For example by disconnecting one plate section 7 from the electrical power system 4, the lower end of the electric arc in the furnace space 3 will be drawn more to those plate sections 7, which are connected to the electrical power system 4, and the geometric form of the electric arc in the furnace space 3 will change.

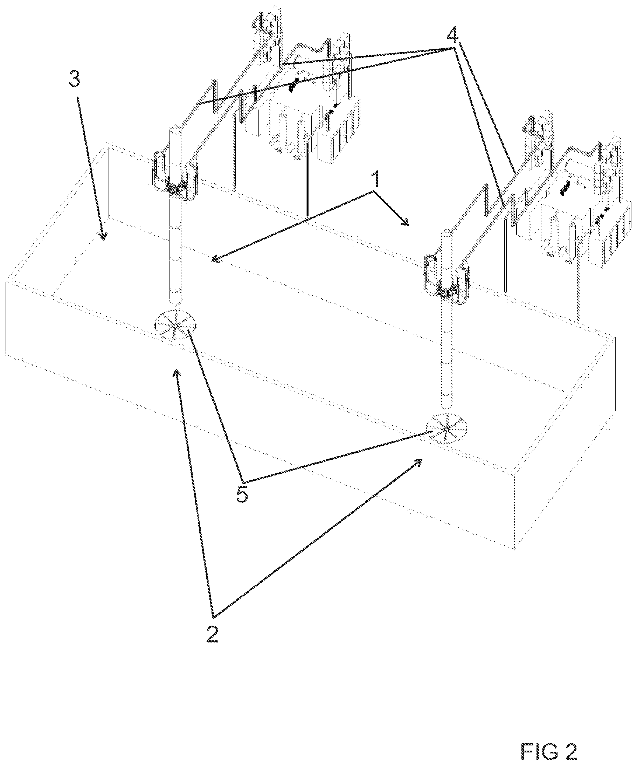

In an embodiment of the method, the plate structure 5 of the bottom electrode assembly 2 has the form of a cylinder having a vertical center axis 10. This embodiment of the method comprises dividing the plate structure 5 by at least one division gap 6 passing the vertical center axis 10 into plate sections 7 having the cross section in the form of a sector as is illustrated in figure 2.

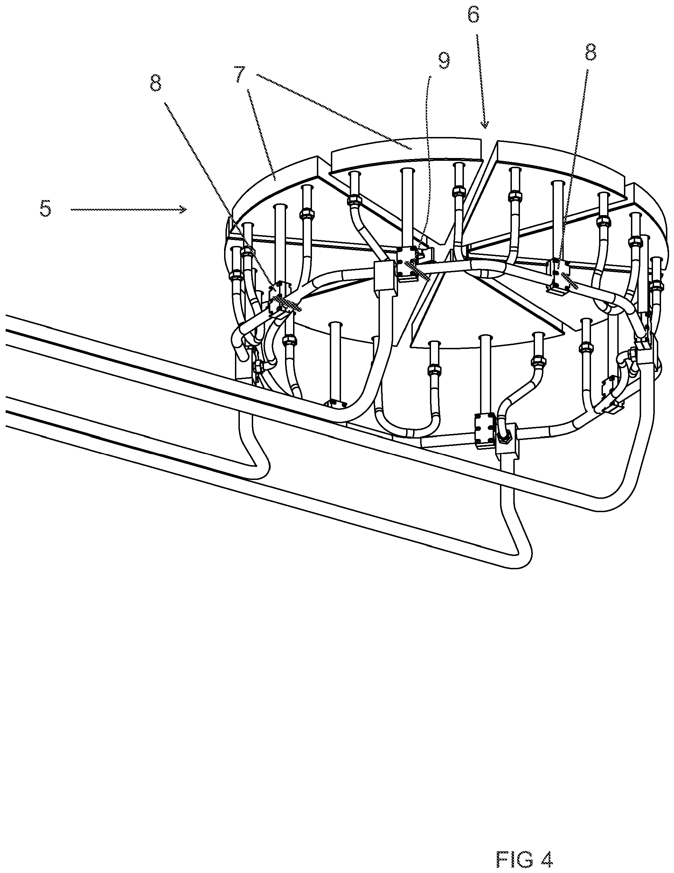

In an embodiment of the method, the plate structure 5 of the bottom electrode assembly 2 has the form of a regular prism having a vertical center axis 10. This embodiment of the method comprises dividing the plate structure 5 by at least one division gap 6 passing the center axis 10 into plate sections 7 having the cross section in the form of a polygon, preferably into plate sections 7 having the cross section in the form of a sector as is illustrated in figure 4.

An embodiment of the method includes operating the connection means 8 manually. An embodiment of the method includes operating the connection means 8 automatically. An embodiment of the method includes operating the connection means 8 semi-automatically.

Next, the electric arc furnace and some embodiments and variants of the electric arc furnace will be described in greater detail.

The electric arc furnace comprises a furnace space 3, a top electrode assembly 1, a bottom electrode assembly 2 comprising a plate structure 5, and an electrical power system 4 configured to supply electrical power to the top electrode assembly 1 and to the bottom electrode assembly 2 to create an electrical arc in the furnace space 3 between the top electrode assembly 1 and the bottom electrode assembly 2.

The furnace space 3 is formed by a furnace shell 11 and can be configured to hold at least one of gas (not shown in the figures), slag (not shown in the figures), and smelt (not shown in the figures).

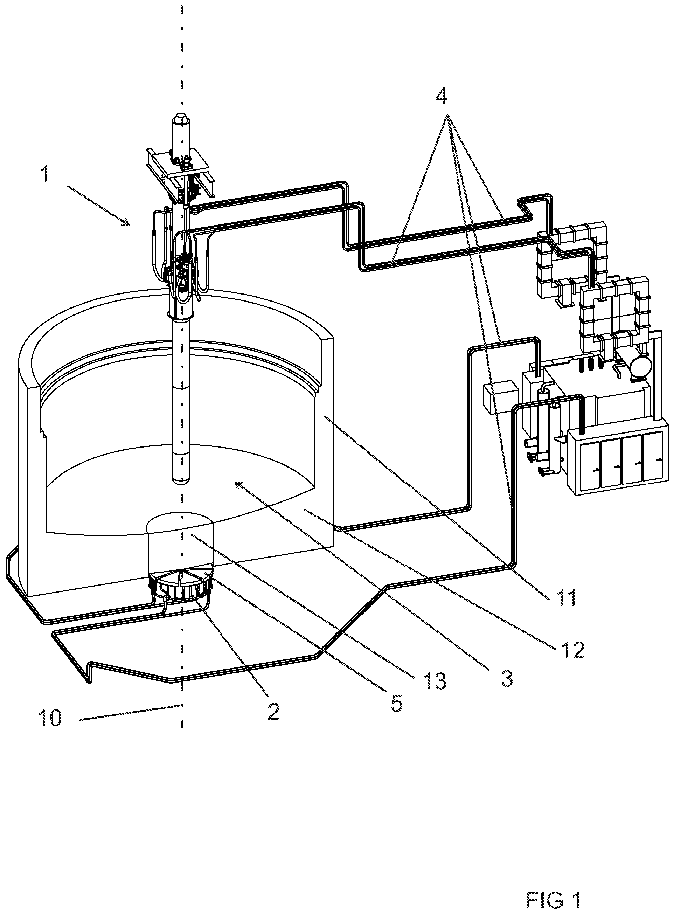

The furnace shell 11 can comprise refractory lining 12 and a conductive heart 13. The electric arc furnace can, as shown in figure 1, comprise one top electrode assembly 1, one bottom electrode assembly 2 comprising a plate structure 5, and one electrical power system 4 configured to supply electrical power to the top electrode assembly 1 and to the bottom electrode assembly 2 to create an electrical arc in the furnace space 3 between the top electrode assembly 1 and the bottom electrode assembly 2.

The electric arc furnace can alternatively, as shown in figure 2, comprise more than one top electrode assembly 1, more than one bottom electrode assembly 2 comprising a plate structure 5, and more than one electrical power system 4 configured to supply electrical power to the top electrode assembly 1 and to the bottom electrode assembly 2 to create an electrical arc in the furnace space 3 between the top electrode assembly 1 and the bottom electrode assembly 2. The plate structure 5 is preferably, but not necessarily, symmetrical about a vertical center axis 10.

The plate structure 5 can have the shape of a symmetrical cylinder or a symmetrical prism.

Alternatively, the plate structure can have the shape of a symmetrical cup that is symmetrical about a vertical center axis 10, the shape of a symmetrical hemisphere that is symmetrical about a vertical center axis 10, or the shape of a part of a symmetrical hemisphere that is symmetrical about a vertical center axis 10 so that an upper surface (not marked with a reference numeral) of the plate structure 5 is in cross-section at least partly curved and/or inclined between the vertical center axis 10 of the plate structure and a perimeter (not marked with a reference numeral) of the plate structure 5.

The plate structure 5 may have an aperture 11 at a vertical center axis 10 of the plate structure 5.

The plate structure 5 of the bottom electrode assembly 2 is divided by division gaps 6 into at least two plate sections 7, and each plate section 7 being connected to the electrical power system 4 by means of connection means 8 configured to connect and disconnect at least one plate section 7 from the electrical power system 4. Alternatively or additionally, the connection means 8 can be configured to individually connect and disconnect each plate section 7 from the electrical power system 4. Alternatively or additionally, the connection means 8 can be configured to connect and disconnect the plate sections 7 in series from the electrical power system 4. The plate sections 7 into which the plate structure 5 of the bottom electrode assembly 2 is divided by division gaps 6 are preferably, but not necessarily, identical. The number of division gaps 6 can be even or uneven.

For example by disconnecting one plate section 7 from the electrical power system 4, the lower end of the electric arc in the furnace space 3 will be drawn more to those plate sections 7, which are connected to the electrical power system 4, and the geometric form of the electric arc in the furnace space 3 will change.

In an embodiment of the electric arc furnace, the plate structure 5 has the form of a cylinder having a vertical center axis 10. In this embodiment of the electric arc furnace, the plate structure 5 is divided by at least one division gap 6 passing the vertical center axis 10 into plate sections 7 having the cross section in the form of a sector. Such an embodiment of the electric arc furnace is shown in figure 2.

In an embodiment of the electric arc furnace, the plate structure 5 has the form of a regular prism having a vertical center axis 10. In this embodiment of the electric arc furnace, the plate structure 5 is divided by at least one division gap 6 passing the center axis 10 into plate sections 7 having the cross section in the form of a polygon, preferably into plate sections 7 having the cross section in the form of a triangle.

In an embodiment of the electric arc furnace, the plate structure 5 has the form of a rectangular prism having a cross section in the form of a square and having a vertical center axis 10. In this embodiment of the electric arc furnace, the plate structure 5 is divided by at least one division gap 6 into plate sections 7 having the cross section in the form of a polygon, preferably into plate sections 7 having the cross section in the form of a triangle, a rectangle, or a square or alike.

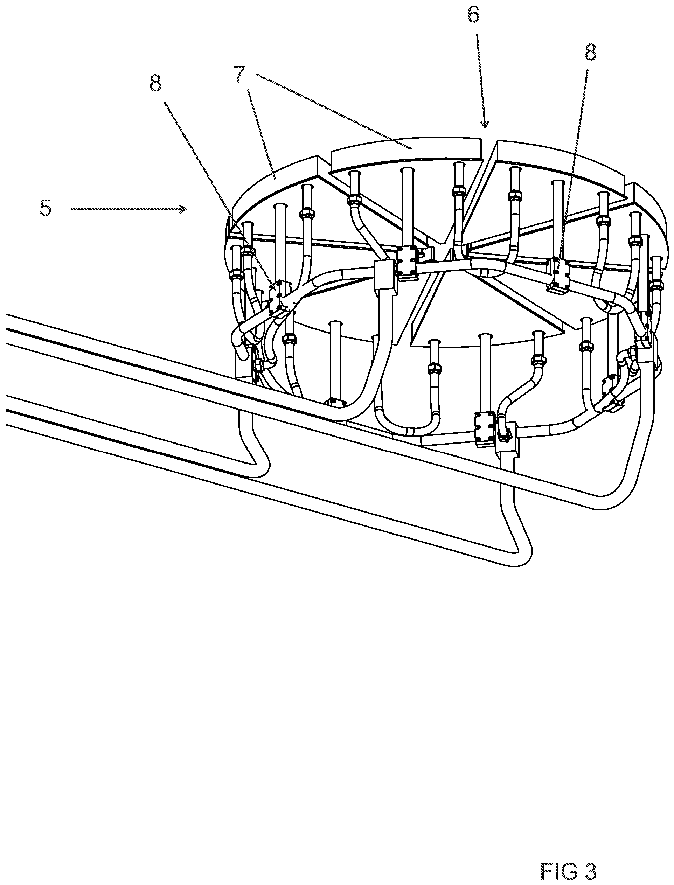

In an embodiment of the electric arc furnace, the connection means 8 are manually operable for example by means of a switch 9, as shown in figure 3. In another embodiment of the electric arc furnace, the connection means 8 are automatically operable. In another embodiment of the electric arc furnace, the connection means 8 are semi-automatically operable.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for controlling a geometric form of an electric arc between a top electrode assembly (1) and a bottom electrode assembly (2) in a furnace space (3) of an electric arc furnace,
wherein the electric arc furnace an electrical power system (4) configured to supply electrical power to the top electrode assembly (1) and to the bottom electrode assembly (2) to create an electrical arc in the furnace space (3) between the top electrode assembly (1) and the bottom electrode assembly (2), and wherein the bottom electrode assembly (2) comprising a plate structure (5),
**characterized**
**by** the method comprising dividing the plate structure (5) of the bottom electrode assembly (2) by division gaps (6) into at least two plate sections (7),
by connecting each plate section (7) to the electrical power system (4) by means of connection means (8) configured to connect and disconnect at least one plate section (7) from the electrical power system (4), and
by controlling the geometric form of the arc between the top electrode and the bottom electrode in the electric arc furnace by means of the connection means (8).

2. The method according to claim 1, **characterized**
**by** the plate structure (5) having the form of a cylinder having a vertical center axis (10), and
by dividing the plate structure (5) by at least one division gap (6) passing the vertical center axis (10) into plate sections (7) having the cross section in the form of a sector.

3. The method according to claim 1, **characterized**
**by** the plate structure (5) having the form of a regular prism having a vertical center axis (10), and
by the plate structure (5) being divided by at least one division gap (6) passing the center axis (10) into plate sections (7) having the cross section in the form of a polygon, preferably into plate sections (7) having the cross section in the form of a triangle.

4. The method according to any of the claims 1 to 3, **characterized by** operating the connection means (8) manually, semi-automatically, or automatically.

5. The method according to any of the claims 1 to 4, **characterized by** individually connecting plate sections (7) to the electrical power system (4) by means of said connection means (8) to control the geometric form of the arc between the top electrode and the bottom electrode in the electric arc furnace by means of the connection means (8) .

6. The method according to any of the claims 1 to 5, **characterized by** individually disconnecting plate section (7) from the electrical power system (4) by means of said connection means (8) to control the geometric form of the arc between the top electrode and the bottom electrode in the electric arc furnace by means of the connection means (8).

7. The method according to any of the claims 1 to 6, **characterized by** connecting plate sections (7) in series to the electrical power system (4) by means of said connection means (8) to control the geometric form of the arc between the top electrode and the bottom electrode in the electric arc furnace by means of the connection means (8) .

8. The method according to any of the claims 1 to 7, **characterized by** individually disconnecting plate section (7) in series from the electrical power system (4) by means of said connection means (8) to control the geometric form of the arc between the top electrode and the bottom electrode in the electric arc furnace by means of the connection means (8).

9. An electric arc furnace comprising
a furnace space (3),
a top electrode assembly (1),
a bottom electrode assembly (2) comprising a plate structure (5), and
an electrical power system (4) configured to supply electrical power to the top electrode assembly (1) and to the bottom electrode assembly (2) to create an electrical arc in the furnace space (3) between the top electrode assembly (1) and the bottom electrode assembly (2),
**characterized**
**by** the plate structure (5) of the bottom electrode assembly (2) being divided into at least two plate sections (7), and
by each plate section (7) being connected to the electrical power system (4) by means of connection means (8) configured to connect and disconnect at least one plate section (7) from the electrical power system (4).

10. The electric arc furnace according to claim 9, **characterized**
**by** the plate structure (5) having the form of a cylinder having a vertical center axis (10), and
by the plate structure (5) being divided by at least one division gap (6) passing the vertical center axis (10) into plate sections (7) having the cross section in the form of a sector.

11. The electric arc furnace according to claim 9, **characterized**
**by** the plate structure (5) having the form of a regular prism having a vertical center axis (10), and
by the plate structure (5) being divided by at least one division gap (6) passing the center axis (10) into plate sections (7) having the cross section in the form of a polygon, preferably into plate sections (7) having the cross section in the form of a triangle.

12. The electric arc furnace according to claim 9, **characterized**
**by** the plate structure (5) having the form of a rectangular prism having a cross section in the form of a square and having a vertical center axis (10), and
by the plate structure (5) being divided by at least one division gap (6) into plate sections (7) having the cross section in the form of a polygon, preferably into plate sections (7) having the cross section in the form of a triangle, a rectangle, or a square or alike.

13. The electric arc furnace according to any of the claims 9 to 12, **characterized by** said connection means (8) being configured to individually connect plate sections (7) to the electrical power system (4) to control the geometric form of the arc between the top electrode and the bottom electrode in the electric arc furnace by means of the connection means (8).

14. The electric arc furnace according to any of the claims 9 to 13, **characterized by** said connection means (8) being configured to individually disconnect plate sections (7) to the electrical power system (4) to control the geometric form of the arc between the top electrode and the bottom electrode in the electric arc furnace by means of the connection means (8).

15. The electric arc furnace according to any of the claims 9 to 14, **characterized by** said connection means (8) being configured to connect plate sections (7) in series to the electrical power system (4) to control the geometric form of the arc between the top electrode and the bottom electrode in the electric arc furnace by means of the connection means (8).

16. The electric arc furnace according to any of the claims 9 to 15, **characterized by** said connection means (8) being configured to disconnect plate sections (7) in series to the electrical power system (4) to control the geometric form of the arc between the top electrode and the bottom electrode in the electric arc furnace by means of the connection means (8).

## Patentansprüche

1. Ein Verfahren zum Steuern einer geometrischen Form eines elektrischen Lichtbogens zwischen einer oberen Elektrodenanordnung (1) und einer unteren Elektrodenanordnung (2) in einem Ofenraum (3) eines Elektrolichtbogenofens,
wobei der Elektrolichtbogenofen ein elektrisches Stromversorgungssystem (4) aufweist, das so angeordnet ist, dass es der oberen Elektrodenanordnung (1) und der unteren Elektrodenanordnung (2) elektrische Energie zuführt, um einen elektrischen Lichtbogen in dem Ofenraum (3) zwischen der oberen Elektrodenanordnung (1) und der unteren Elektrodenanordnung (2) zu erzeugen, und wobei die untere Elektrodenanordnung (2) eine Plattenstruktur (5) umfasst,
**gekennzeichnet**
**durch** das Verfahren, dass das Unterteilen der Plattenstruktur (5) der unteren Elektrodenanordnung (2) durch Trennungsspalten (6) in mindestens zwei Plattenabschnitte (7) umfasst,
**durch** die Verbindung von jedem Plattenabschnitt (7) mit dem elektrischen Stromversorgungssystem (4) mittels Verbindungsmitteln (8), die so angeordnet sind, dass sie mindestens einen Plattenabschnitt (7) mit dem elektrischen Stromversorgungssystem (4) verbinden und von diesem trennen, und
**durch** das Steuern der geometrischen Form des Lichtbogens zwischen der oberen Elektrode und der unteren Elektrode in dem Elektrolichtbogenofen mit Hilfe der Verbindungsmittel (8).

2. Das Verfahren nach Anspruch 1, **gekennzeichnet durch** die Plattenstruktur (5), die die Form eines Zylinders mit einer vertikalen Mittelachse (10) hat, und
**durch** Unterteilen der Plattenstruktur (5) **durch** mindestens einen Trennungsspalt (6), der **durch** die vertikale Mittelachse (10) verläuft, in Plattenabschnitte (7), die den Querschnitt in der Form eines Sektors haben.

3. Das Verfahren nach Anspruch 1, **gekennzeichnet durch** die Plattenstruktur (5), die die Form eines regelmäßigen Prismas mit einer vertikalen Mittelachse (10) hat, und
**durch** die Plattenstruktur (5), die **durch** mindestens einen Trennungsspalt (6), der **durch** die vertikale Mittelachse (10) verläuft, in Plattenabschnitte (7) unterteilt ist, die den Querschnitt in der Form eines Polygons haben, vorzugsweise in Plattenabschnitte (7) mit dem Querschnitt in der Form eines Dreiecks.

4. Das Verfahren nach einem der Ansprüche 1 bis 3,
**gekennzeichnet durch** die manuelle, halbautomatische, oder automatische Betätigung der Verbindungsmittel (8).

5. Das Verfahren nach einem der Ansprüche 1 bis 4,
**gekennzeichnet durch** individuelles Verbinden von Plattenabschnitten (7) mit dem elektrischen Stromversorgungssystem (4) mittels der Verbindungsmittel (8) zum Steuern der geometrischen Form des Lichtbogens zwischen der oberen Elektrode und der unteren Elektrode in dem Elektrolichtbogenofen mittels der Verbindungsmittel (8).

6. Das Verfahren nach einem der Ansprüche 1 bis 5,
**gekennzeichnet durch** individuelles Trennen des Plattenabschnitts (7) von dem elektrischen Stromversorgungssystem (4) mittels der Verbindungsmittel (8), zum Steuern der geometrischen Form des Lichtbogens zwischen der oberen Elektrode und der unteren Elektrode in dem Elektrolichtbogenofen mittels der Verbindungsmittel (8).

7. Das Verfahren nach einem der Ansprüche 1 bis 6,
**gekennzeichnet durch** die Verbindung der Plattenabschnitte (7) in Reihe an das elektrische Stromversorgungssystem (4) mittels der Verbindungsmittel (8), zum Steuern der geometrischen Form des Lichtbogens zwischen der oberen Elektrode und der unteren Elektrode in dem Elektrolichtbogenofen mittels der Verbindungsmittel (8).

8. Das Verfahren nach einem der Ansprüche 1 bis 7,
**gekennzeichnet durch** individuelles Trennen des Plattenabschnitts (7) in Reihe von dem elektrischen Stromversorgungssystem (4) mittels der Verbindungsmittel (8), zum Steuern der geometrischen Form des Lichtbogens zwischen der oberen Elektrode und der unteren Elektrode in dem Elektrolichtbogenofen mittels der Verbindungsmittel (8).

9. Ein Elektrolichtbogenofen umfassend:
einen Ofenraum (3),
eine obere Elektrodenanordnung (1),
eine untere Elektrodenanordnung (2) umfassend eine Plattenstruktur (5), und
ein elektrisches Stromversorgungssystem (4), das so angeordnet ist, dass es der oberen Elektrodenanordnung (1) und der unteren Elektrodenanordnung (2) elektrische Energie zuführt, um einen elektrischen Lichtbogen in dem Ofenraum (3) zwischen der oberen Elektrodenanordnung (1) und der unteren Elektrodenanordnung (2) zu erzeugen,
**gekennzeichnet**
**durch** die Plattenstruktur (5) der unteren Elektrodenanordnung (2), die in mindestens zwei Plattenabschnitte (7) unterteilt ist, und
**durch** jeden Plattenabschnitt (7), der an das elektrische Stromversorgungssystem (4) mittels Verbindungsmittel (8) verbunden ist, die so angeordnet sind, um mindestens einen Plattenabschnitt (7) mit dem elektrischen Stromversorgungssystem (4) zu verbinden und zu trennen.

10. Der Elektrolichtbogenofen nach Anspruch 9, **gekennzeichnet**
**durch** die Plattenstruktur (5), die die Form eines Zylinders mit einer vertikalen Mittelachse (10) hat, und
**durch** die Plattenstruktur (5), die durch mindestens einen Trennungsspalt (6), der durch die vertikale Mittelachse (10) verläuft, in Plattenabschnitte (7) unterteilt ist, die den Querschnitt in der Form eines Sektors haben.

11. Der Elektrolichtbogenofen nach Anspruch 9, **gekennzeichnet**
**durch** die Plattenstruktur (5), die die Form eines regelmäßigen Prismas mit einer vertikalen Mittelachse (10) hat, und
**durch** die Plattenstruktur (5), die durch mindestens einen Trennungsspalt (6), der durch die vertikale Mittelachse (10) verläuft, in Plattenabschnitte (7) unterteilt ist, die den Querschnitt in der Form eines Polygons haben, vorzugsweise in Plattenabschnitte (7) mit dem Querschnitt in der Form eines Dreiecks.

12. Der Elektrolichtbogenofen nach Anspruch 9, **gekennzeichnet**
**durch** die Plattenstruktur (5), die die Form eines rechteckigen Prismas mit einem Querschnitt in der Form eines Quadrats und mit einer vertikalen Mittelachse (10) hat, und
**durch** die Plattenstruktur (5), die durch mindestens einen Trennungsspalt (6) in Plattenabschnitte (7) unterteilt ist, die den Querschnitt in der Form eines Polygons haben, vorzugsweise in Plattenabschnitte (7) mit dem Querschnitt in der Form eines Dreiecks, eines Rechtecks oder eines Quadrats oder ähnlichem.

13. Der Elektrolichtbogenofen nach einem der Ansprüche 9 bis 12,
**gekennzeichnet durch** die Verbindungsmittel (8), die so angeordnet sind, um individuell Plattenabschnitte (7) mit dem elektrischen Stromversorgungssystem (4) zu verbinden, um die geometrische Form des Lichtbogens zwischen der oberen Elektrode und der unteren Elektrode in dem Elektrolichtbogenofen mittels der Verbindungsmittel (8) zu steuern.

14. Der Elektrolichtbogenofen nach einem der Ansprüche 9 bis 13,
**gekennzeichnet durch** die Verbindungsmittel (8), die so angeordnet sind, um individuell Plattenabschnitte (7) von dem elektrischen Stromversorgungssystem (4) zu trennen, um die geometrische Form des Lichtbogens zwischen der oberen Elektrode und der unteren Elektrode in dem Elektrolichtbogenofen mittels der Verbindungsmittel (8) zu steuern.

15. Der Elektrolichtbogenofen nach einem der Ansprüche 9 bis 14,
**gekennzeichnet durch** die Verbindungsmittel (8), die so angeordnet sind, um
Plattenabschnitte (7) in Reihe an das elektrische Stromversorgungssystem (4) zu verbinden, um die geometrische Form des Lichtbogens zwischen der oberen Elektrode und der unteren Elektrode in dem Elektrolichtbogenofen mittels der Verbindungsmittel (8) zu steuern.

16. Der Elektrolichtbogenofen nach einem der Ansprüche 9 bis 15,
**gekennzeichnet durch** die Verbindungsmittel (8), die so angeordnet sind, um
Plattenabschnitte (7) in Reihe von dem elektrischen Stromversorgungssystem (4) zu trennen, um die geometrische Form des Lichtbogens zwischen der oberen Elektrode und der unteren Elektrode in dem Elektrolichtbogenofen mittels der Verbindungsmittel (8) zu steuern.

## Revendications

1. Procédé pour contrôler une forme géométrique d'un arc électrique entre un ensemble d'électrode supérieure (1) et un ensemble d'électrode inférieure (2) dans un espace de four (3) d'un four à arc électrique,
dans lequel un système d'alimentation électrique (4) du four à arc électrique est configuré pour fournir l'alimentation électrique à l'ensemble d'électrode supérieure (1) et à l'ensemble d'électrode inférieure (2) pour créer un arc électrique dans l'espace de four (3) entre l'ensemble d'électrode supérieure (1) et l'ensemble d'électrode inférieure (2), et dans lequel l'ensemble d'électrode inférieure (2) comprenant une structure de plaque (5),
**caractérisé par** le procédé qui comprend l'étape pour diviser la structure de plaque (5) de l'ensemble d'électrode inférieure (2) par des espaces de division (6) en au moins deux sections de plaque (7),
en raccordant chaque section de plaque (7) au système d'alimentation électrique (4) au moyen d'un moyen de raccordement (8) configuré pour raccorder et déconnecter au moins une section de plaque (7) du système d'alimentation électrique (4), et
en contrôlant la forme géométrique de l'arc entre l'électrode supérieure et l'électrode inférieure dans le four à arc électrique au moyen du moyen de raccordement (8).

2. Procédé selon la revendication 1, **caractérisé :**
**par** la structure de plaque (5) qui a la forme d'un cylindre ayant un axe central vertical (10), et
en divisant la structure de plaque (5) par au moins un espace de division (6) passant par l'axe central vertical (10) en sections de plaque (7) ayant la section transversale en forme de secteur.

3. Procédé selon la revendication 1, **caractérisé :**
**par** la structure de plaque (5) qui a la forme d'un prisme régulier ayant un axe central vertical (10), et
par la structure de plaque (5) qui est divisée par au moins un espace de division (6) passant par l'axe central (10) en sections de plaque (7) ayant la section transversale en forme de polygone, de préférence en sections de plaque (7) ayant la section transversale en forme de triangle.

4. Procédé selon l'une quelconque des revendications 1 à 3, **caractérisé par** l'étape pour actionner le moyen de raccordement (8) manuellement, de manière semi-automatique ou de manière automatique.

5. Procédé selon l'une quelconque des revendications 1 à 4, **caractérisé par** l'étape pour raccorder individuellement les sections de plaque (7) au système d'alimentation électrique (4) au moyen dudit moyen de raccordement (8) pour contrôler la forme géométrique de l'arc entre l'électrode supérieure et l'électrode inférieure dans le four à arc électrique au moyen du moyen de raccordement (8).

6. Procédé selon l'une quelconque des revendications 1 à 5, **caractérisé par** l'étape pour déconnecter individuellement la section de plaque (7) du système d'alimentation électrique (4) au moyen dudit moyen de raccordement (8) pour contrôler la forme géométrique de l'arc entre l'électrode supérieure et l'électrode inférieure dans le four à arc électrique au moyen du moyen de raccordement (8).

7. Procédé selon l'une quelconque des revendications 1 à 6, **caractérisé par** l'étape pour raccorder les sections de plaque (7) en série au système d'alimentation électrique (4) au moyen dudit moyen de raccordement (8) pour contrôler la forme géométrique de l'arc entre l'électrode supérieure et l'électrode inférieure dans le four à arc électrique au moyen du moyen de raccordement (8).

8. Procédé selon l'une quelconque des revendications 1 à 7, **caractérisé par** l'étape pour déconnecter individuellement la section de plaque (7) en série du système d'alimentation électrique (4) au moyen dudit moyen de raccordement (8) pour contrôler la forme géométrique de l'arc entre l'électrode supérieure et l'électrode inférieure dans le four à arc électrique au moyen du moyen de raccordement (8).

9. Four à arc électrique comprenant :
un espace de four (3),
un ensemble d'électrode supérieure (1),
un ensemble d'électrode inférieure (2) comprenant une structure de plaque (5), et
un système d'alimentation électrique (4) configuré pour fournir l'alimentation électrique à l'ensemble d'électrode supérieure (1) et à l'ensemble d'électrode inférieure (2) pour créer un arc électrique dans l'espace de four (3) entre l'ensemble d'électrode supérieure (1) et l'ensemble d'électrode inférieure (2),
**caractérisé :**
**par** la structure de plaque (5) de l'ensemble d'électrode inférieure (2) qui est divisée en au moins deux sections de plaque (7), et
par chaque section de plaque (7) qui est raccordée au système d'alimentation électrique (4) au moyen du moyen de raccordement (8) configuré pour raccorder et déconnecter au moins une section de plaque (7) du système d'alimentation électrique (4).

10. Four à arc électrique selon la revendication 9, **caractérisé :**
**par** la structure de plaque (5) qui a la forme d'un cylindre ayant un axe central vertical (10), et
par la structure de plaque (5) qui est divisée par au moins un espace de division (6) passant par l'axe central vertical (10) en sections de plaque (7) ayant la section transversale en forme de secteur.

11. Four à arc électrique selon la revendication 9, **caractérisé :**
**par** la structure de plaque (5) qui a la forme d'un prisme régulier ayant un axe central vertical (10), et
par la structure de plaque (5) qui est divisée par au moins un espace de division (6) passant par l'axe central (10) en sections de plaque (7) ayant la section transversale en forme de polygone, de préférence en sections de plaque (7) ayant la section transversale en forme de triangle.

12. Four à arc électrique selon la revendication 9, **caractérisé :**
**par** la structure de plaque (5) qui a la forme d'un prisme rectangulaire ayant une section transversale en forme de carré et ayant un axe central vertical (10), et
par la structure de plaque (5) qui est divisée par au moins un espace de division (6) en sections de plaque (7) ayant la section transversale en forme de polygone, de préférence en sections de plaque (7) ayant la section transversale en forme de triangle, de rectangle ou de carré ou similaire.

13. Four à arc électrique selon l'une quelconque des revendications 9 à 12, **caractérisé par** ledit moyen de raccordement (8) qui est configuré pour raccorder individuellement les sections de plaque (7) au système d'alimentation électrique (4) pour contrôler la forme géométrique de l'arc entre l'électrode supérieure et l'électrode inférieure dans le four à arc électrique au moyen du moyen de raccordement (8).

14. Four à arc électrique selon l'une quelconque des revendications 9 à 13, **caractérisé par** ledit moyen de raccordement (8) qui est configuré pour déconnecter individuellement les sections de plaque (7) du système d'alimentation électrique (4) pour contrôler la forme géométrique de l'arc entre l'électrode supérieure et l'électrode inférieure dans le four à arc électrique au moyen du moyen de raccordement (8).

15. Four à arc électrique selon l'une quelconque des revendications 9 à 14, **caractérisé par** ledit moyen de raccordement (8) qui est configuré pour raccorder les sections de plaque (7) en série au système d'alimentation électrique (4) pour contrôler la forme géométrique de l'arc entre l'électrode supérieure et l'électrode inférieure dans le four à arc électrique au moyen du moyen de raccordement (8).

16. Four à arc électrique selon l'une quelconque des revendications 9 à 15, **caractérisé par** ledit moyen de raccordement (8) qui est configuré pour déconnecter les sections de plaque (7) en série du système d'alimentation électrique (4) pour contrôler la forme géométrique de l'arc entre l'électrode supérieure et l'électrode inférieure dans le four à arc électrique au moyen du moyen de raccordement (8).
